(19) Europäisches Patentamt / European Patent Office / Office européen des brevets

(11) **EP 4 687 250 A1**

(12) **EUROPEAN PATENT APPLICATION**

(43) Date of publication:
04.02.2026 Bulletin 2026/06

(21) Application number: 24192530.4

(22) Date of filing: 02.08.2024

(51) International Patent Classification (IPC):
*H02J 3/36* (2026.01)     *H02J 3/00* (2026.01)
*H02M 1/32* (2007.01)

(52) Cooperative Patent Classification (CPC):
H02J 3/36; H02J 3/00125; H02M 1/32;
H02M 7/4835

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Hitachi Energy Ltd
8050 Zürich (CH)**

(72) Inventors:
• **Hafner, Ying-Jiang
  771 42 Ludvika (SE)**
• **Choudhury, Saurav
  Bengaluru, Karnataka 562125 (IN)**

(74) Representative: **AWA Sweden AB
Box 45086
104 30 Stockholm (SE)**

(54) **SUPPRESSING TRANSIENT REVERSING CURRENT ON DC SIDE OF A HVDC-SYSTEM**

(57) The present disclosure relates to a method (1000) of controlling a converter (20, 50) of a multi-terminal, MT-, HVDC system (1) when said converter (20, 50) is being separated from a part of said MT-HVDC system (1) due to an operation of a DC circuit breaker (HHB1), said operation of said DC circuit breaker (HHB1) being carried out in response to a disturbance of an operation of the MT-HVDC system (1). The method comprising: providing (1001) a signal indicative of a DC current (id) between a DC side of said converter (20, and the DC circuit breaker (HHB1) changing direction so that the DC current (id) flows towards said DC side of said converter (20); if said converter (20) is operating in rectifier mode before said disturbance and operating to regulate a frequency and a voltage of a connected AC system (30), increasing (1002) a DC side voltage (ud-S1, ud-S2) of said converter (20, 50) by a DC side delta voltage depending on said signal, wherein said DC side delta voltage is based on a pre-fixed value (FIXED_DC_OFS) and/or a regulated value dependent on the DC current (REG_DC_OFS). A control unit and a MT-HVDC system is also disclosed.

**Fig. 1**

EP 4 687 250 A1

## Description

Technical Field

The invention relates to a method of controlling at least one converter of a multi-terminal HVDC system, MT-HVDC system, a control unit for performing said method, and a MT-HVDC system comprising the same.

Background

A multi-terminal HVDC, MTDC, system uses multiple transmission lines to connect two or more terminals. Multiple terminal stations, each with their own converter, is connected to a respective terminal. These converters can operate with different control modes depending on connected AC and DC conditions, such as DC voltage control mode, active power control mode, frequency and voltage control mode, or island network control. Power supplied by converters operating as rectifiers is equal to the combined power received by converters operating as inverters. In a MTDC system, it is undesirable to use an AC circuit breaker on an AC side because it will deenergize the whole DC network instead of isolating the part(s) thereof having fault or scheduled maintenance. Therefore, a MTDC system uses a DC circuit breakers, such as a hybrid voltage DC circuit breaker, HHB, to safely deenergize the DC network or isolate parts thereof in case of fault clearance or maintenance work. A plurality of DC circuit breakers can be arranged in a switch station for interconnecting three or more parts of the MTDC system via respective terminals.

A HHB comprises a main breaker and a load current switch, LCS, arranged in parallel with the main breaker. The main breaker comprises a plurality of main breaker modules, wherein each main breaker module is arranged in parallel with a non-linear resistor such as a metal-oxide varistor, MOV. By activating the HHB, a MTDC system part can be isolated from the MTDC system. Activation of the HHB is carried out as follows. Firstly, the LCS is opened. Secondly, the main breaker is opened. Consequently, the current is forced into the non-linear resistor which has a characteristic of voltage depending on the current. Due to this characteristic, the voltage at a terminal of the separated MTDC system part is pushed higher than normal DC voltage, thereby causing a current flow from the terminal to a DC side of a converter of the separated MTDC system part. If feeding the converter with power both from AC side and DC side, the cell capacitors of the converter will simultaneously accumulate said power, thus causing the cell voltage to increase very fast to trip level and possibly a forced shutdown of the converter. Consequently, MTDC system parts may be forced to shut down even though they are healthy.

One solution to this problem is to control a second converter connected to the DC side of the first converter from rectifier mode to inverter mode, whereby the second converter can help absorbing the excess power received from the DC side. However, it is difficult to control a second converter in time to be able to help the first converter, thus, sometimes failing to prevent the cell voltage of the first converter to reach trip level.

In view of the above, it is of interest to provide a solution which alleviates at least some of the problems of currently available power converter solutions.

Summary

It is an object of the present disclosure to provide an improved solution that alleviates the mentioned drawbacks with present solutions. A first object of the disclosure is to provide a method of controlling a converter of a multi-terminal HVDC system so as to slow down how fast cell voltage of the converter reaches a trip level, preferably preventing the converter from being forced to shutdown when a MTDC system part is separated. A second object of the disclosure is to provide a control unit for performing the method. A third object of the disclosure is to provide a multi-terminal HVDC system incorporating said control unit. These objects are solved by the invention defined by the claims. Various aspects of the disclosure and embodiments thereof are summarized in the following.

According to a first aspect of the present invention, a method is provided of controlling a converter of a multi-terminal HVDC system when said converter is being separated from a part of said multi-terminal HVDC system due to an operation of a DC circuit breaker. The operation of the DC circuit breaker is carried out in response to a disturbance of an operation of the multi-terminal HVDC. The method comprises a first step and a second step. In the first step, a signal is provided. The signal is indicative of a DC current, between a DC side of said converter and the DC circuit breaker, changing direction so that the DC current flows towards said DC side of said converter. In the second step, if said converter is operating in a rectifier mode before said disturbance and operating to regulate a frequency and a voltage of a connected AC system, a DC side voltage of said converter is increased by a DC side delta voltage depending on said signal. Said DC side delta voltage is based on a value independent of the DC current and/or a regulated value dependent on the DC current.

By such a method, the DC side voltage of said converter can be increased, thereby reducing the voltage difference between the DC side of the converter and the DC circuit breaker. As a consequence, a DC current reversal is counteracted. Moreover, the DC side delta voltage can be adjusted so that the voltage difference between the DC side of the converter and the DC circuit breaker is substantially zero. By reducing this voltage difference, the DC current reversal is counteracted, preferably substantially prevented. The method thereby advantageously may be applied so as to slow down how fast cell voltage of the converter is increased, preferably preventing the converter from receiving power from the DC side while at the same time receiving power from the AC side. Thus, the method can be applied to prevent the converter from shutting down.

As a non-limiting example, said DC side delta voltage is based on a value independent of the DC current, for instance a fixed value or a value which varies independently of the DC current. As a non-limiting example, said DC side delta voltage is based on a regulated value dependent on the DC current. As a non-limiting example, said DC side voltage comprises a first component based on a value independent of the DC current in the manner as exemplified above and a second component based on a regulated value dependent on the DC current.

According to one embodiment, the DC side delta voltage is reduced to zero a certain time delay after the DC current direction is changed back to a direction from said DC side of said converter to said DC circuit breaker. As such, the method applies the DC side delta voltage in a transient manner, thus providing an effect which mirrors the transient nature of the disturbance that can occur when triggering the DC circuit breaker.

According to one embodiment, the method is adapted for a converter being a modular multilevel converter comprising a plurality of cells which are divided at least in a positive arm of a first phase of said converter and a negative arm of said first phase of said converter, each cell configured to be in either a bypass state or a voltage insert mode, wherein cells in voltage insert mode for a particular arm during normal operations is specified by an insertion index comprising data representing the portion of available cells that should be in said voltage insert mode for a particular arm, the method comprising: modifying the insertion index of said positive arm and said negative arm of at least a first phase so that the DC side delta voltage is shared by said positive arm and said negative arm without substantially affecting an AC side voltage of said converter. As a non-limiting example, the modular multilevel converter may comprise a positive arm and a negative arm for one phase, for two phases, or for three phases, or for any number of phases, wherein each positive arm and/or each negative arm are designed in the manner as herein described. The number of cells in the plurality of cells may be selected depending on application and the number of phases. The method is not limited as such to any particular number of cells in the plurality of cells or the number of phases, however, the method may be more advantageous if the number of cells is such that it offers increasing flexibility in terms of which cells are bypassed and/or connected. Thus, more options are available and the method may be applied more advantageously so as to adjust the DC side delta voltage to a desired voltage.

According to one embodiment, said step of increasing a DC side voltage of said converter by a DC side delta voltage includes: selecting the number of cells inserted in said voltage insert mode in dependence of the insertion index for said positive arm; and selecting the number of cells inserted in said voltage insert mode in dependence of the insertion index for said negative arm. The concept of insertion index is discussed in the detailed description of this disclosure.

According to one embodiment, said step of providing said signal includes: measuring a present value of the DC current, and providing said signal if the measured amplitude of the DC current exceeds a threshold value, wherein said threshold value is a constant, such as zero. This yields the advantage of providing a reliable yet responsive solution on how to detect a DC current reversal. As an alternative, other threshold values may be used, depending on circuit design.

According to one embodiment, the step of increasing a DC side voltage of said converter by a DC side delta voltage depending on said signal includes: determining a fixed value and/or independent value of the DC current as said DC delta voltage. By this, a control circuit may be designed in a more simpler manner, thus providing a more cost-efficient solution.

According to one embodiment, said step of increasing said DC side voltage of said converter by a DC side delta voltage depending on said signal includes: measuring a present value of the DC current; determining said DC delta voltage as a value dependent on both the measured value of the DC current and a reference amplitude of the DC current. By this, a control circuit may providing a more precise adjustment of the DC side delta voltage.

According to one embodiment, said step of determining said DC delta voltage as a value dependent on both the measured value of the DC current and a reference amplitude of the DC current includes: computing an error signal based on a difference between the measured amplitude of the DC current and the reference amplitude of the DC current; determining said value based on a proportional component of the error signal and an integral component of the error signal.

According to one embodiment, said step of increasing the DC side voltage of said converter by a DC side delta voltage depending on said signal includes: adjusting said DC side delta voltage so that a difference between the DC side voltage and a voltage at the DC circuit breaker is reduced. By this, cell voltage of the converter may be prevented from increasing too rapidly. Moreover, said adjusting said DC side delta voltage so that a difference between the DC side voltage and the voltage at the DC circuit breaker is reduced may be performed in a transient manner.

According to one embodiment, said step of adjusting said DC side delta voltage is performed so that a difference between the DC side voltage and a voltage at the DC circuit breaker is substantially zero. By this, cell voltage of the converter may advantageously be effectively prevented from reaching a trip level, and consequently be forced to shut down. Moreover, said adjusting said DC side delta voltage so that a difference between the DC side voltage and the voltage at the DC circuit breaker is reduced may be performed in a transient manner.

According to one embodiment, said signal indicative of a DC current between a DC side of said converter and the DC circuit breaker changing direction is a first signal. The method further comprises: receiving at least a second signal, and providing a control signal based on said first signal and said at least a second signal, wherein said step of increasing a DC side voltage is performed in response to said control signal, wherein at least one of said first signal and said at least a second signal is one of: i) a trigger signal indicative of the first DC circuit breaker being triggered; ii) a first input signal indicative of converter control mode being in Frequency and voltage control; a second input signal indicative of whether said converter operates in rectifier mode. Thereby, the method may be applied in response to a number of conditions, thus providing a more robust solution, in case any of the signals is not received or transmitted. As a non-limiting example, the control signal may be provided when any of said signal is provided. As a non-limiting example, the control signal may be provided only when at least two signals are provided. As a non-limiting example, the control signal may be provided only when all signals are provided.

According to one embodiment, the method comprises: extending a time duration during which said step of increasing a DC side voltage of said converter by a DC side delta voltage depending on said signal is applied. By this, the method may be applied in a proactive manner, thereby further reducing the risk that cell voltage of a converter reaches trip level, potentially being forced to shut down as a result.

According to a second aspect of the disclosure, a control unit for controlling at least one converter of a multi-terminal, MT-, HVDC system is provided. The control unit is configured to perform the method according to the first aspect or any embodiments thereof. The control unit may comprise a control circuit as herein referenced. The control unit may comprise one or more sensors for sensing and/or providing one or more signals indicative of an operation or status of the MT-HVDC system and/or the converter. The control unit may comprise processing means, such as a processing unit, for processing said signals to determine an appropriate response. The control unit may comprise a memory module for storing, at least temporally, information such as said signals and other parameters and/or information that is or may be pertinent to carrying out the method as herein disclosed. As a non-limiting example, the control unit is configured to make the converter increase its DC side voltage quickly by varying insertion or bypass number of cells via properly modifying insertion index or modulation reference voltage.

According to a third aspect of the disclosure, a multi-terminal, MT-, HVDC system is provided. The MT-HVDC system comprises: a converter comprising an AC side and a DC side, wherein the converter is configured so that, during normal operation of the MT-HVDC system said converter is configured to operate in rectifier mode and configured to operate to regulate a frequency and/or a voltage of a connected AC system; a DC switch station including at least one DC circuit breaker, wherein a first DC circuit breaker of said at least one DC circuit breaker is configured to separate said converter from a part of said MT-HVDC system in response to a disturbance of an operation of the MT-HVDC system; a control unit according to the second aspect or any embodiments thereof. The MT-HVDC system as such is not limited in terms of any number of converter, terminals, MT-HVDC system parts, switching station etc. It should be understood that the MT-HVDC system may be designed with various design complexity depending on application. Optionally, the control unit is configured to increase the DC side voltage directly by varying insertion and/or bypass number of cells via modifying insertion index or modulation reference voltage.

According to one embodiment, the converter is a modular multilevel converter comprising a plurality of cells which are divided at least in a positive arm of a first phase of said converter and a negative arm of said first phase of said converter, each cell configured to be in either a bypass state or a voltage insert mode, wherein cells in voltage insert mode for a particular arm during normal operations is specified by an insertion index comprising data representing the portion of available cells that should be in said voltage insert mode for a particular arm. The converter may be adapted in ways as discussed in the present disclosure.

According to a fourth aspect, a computer program is provided. The computer program comprising instructions which, when the program is executed by a computer, cause the computer to carry out the method according to the first aspect or any embodiments thereof.

According to a fifth aspect, a computer-readable storage medium is provided. The computer-readable storage medium comprising instructions which, when executed by a computer, cause the computer to carry out the method according to the first aspect or any embodiments thereof.

The invention is defined by the appended independent claims, with embodiments being set forth in the appended dependent claims, in the following description and in the drawings.

Brief Description of the Drawings

The invention will in the following be described in more detail with reference to the enclosed drawings, wherein:

Fig. 1 shows a schematic illustration of a multi-terminal HVDC system according to one embodiment of the invention;
Fig. 2 shows an illustration of various steps of a method according to at least one embodiment of the invention;

Fig. 3 shows an illustration of a multi-modular converter according to one embodiment of the invention;

Fig. 4 shows a schematic illustration of a multi-terminal HVDC system according to one embodiment of the invention;

Fig. 5a shows a schematic illustration of a control unit according to one embodiment of the invention;

Fig. 5b shows a schematic illustration of a control unit according to one embodiment of the invention;

Figs. 6a-6c shows various graphs indicating operational values of a multi-terminal HVDC system according to one embodiment of the invention in comparison with a reference multi-terminal HVDC system not implementing the solution of the present disclosure.

Description of Embodiments

Hereinafter, the principle of the present disclosure will be described with reference to the illustrative embodiments. It should be understood that all these embodiments are given merely for the person skilled in the art to better understand and further practice the present disclosure, but not for limiting the scope of the present disclosure. For example, features illustrated or described as part of one embodiment may be used with another embodiment to yield still a further embodiment. In the interest of clarity, not all features of an actual implementation are described in this specification. It will of course be appreciated that in the development of any such actual embodiment, numerous implementation-specific decisions should be made to achieve the developers' specific goals, such as compliance with system-related and business-related constraints, which will vary from one implementation to another. Moreover, it will be appreciated that such a development effort might be complex and time-consuming but would nevertheless be a routine undertaking for those of ordinary skill in the art having the benefit of this disclosure.

The disclosed subject matter will now be described with reference to the attached figures. Various structures, systems and devices are schematically depicted in the drawings for purposes of explanation only and so as to not obscure the description with details that are well known to those skilled in the art. Nevertheless, the attached drawings are included to describe and explain illustrative examples of the disclosed subject matter. The words and phrases used herein should be understood and interpreted to have a meaning consistent with the understanding of those words and phrases by those skilled in the relevant art. No special definition of a term or phrase, i.e., a definition that is different from the ordinary and customary meaning as understood by those skilled in the art, is intended to be implied by consistent usage of the term or phrase herein. To the extent that a term or phrase is intended to have a special meaning, i.e., a meaning other than that understood by skilled artisans, such a special definition will be expressly set forth in the specification in a definitional manner that directly and unequivocally provides the special definition for the term or phrase.

While the foregoing is directed to embodiments of the disclosure, other and further embodiments may be devised without parting from the inventive concept discussed herein. The scope of the invention is however determined by the claims.

In any of the embodiments herein provided, unless otherwise specified, it is implicitly understood that an electrical connection between a first point and a second point may be direct or indirect. Unless otherwise specified, when the electrical connection is indirect the first point and the second point are electrically connected through one or more additional devices electrically connected in series with the first point and the second point.

It is herein understood that fault conditions occur when a disturbance, such as an overcurrent, a short circuit or a scheduled maintenance, occurs to the normal operation of a system, wherein the disturbance may propagate from a first point to a second point, or vice versa.

It is herein understood that a DC circuit breaker, such as a hybrid HVDC circuit breaker or a vacuum circuit breaker, is configured to separate a first point of a system from a second point of the system by hindering a flow of current between the first point of the system and the second point of the system. Preferably, the flow of current is substantially interrupted.

An hybrid HVDC circuit breaker, hereinafter simply referred to as HHB, is a type of direct current circuit breaker commonly used in high voltage direct current (HVDC) systems. The HHB comprises a mechanical switch portion and a solid-state switch portion. The mechanical switch portion comprises a mechanical switch, such as a vacuum circuit breaker, or another type of mechanical switch. The solid-state switch portion comprises a solid-state switch, such as an insulated gate bipolar transistor (IGBT), a gate turn-off thyristor (GTO), a silicon controlled rectifier (SCR), or another type of solid-state switch. The solid-state switch portion further comprises an energy dissipation portion, such as a metal-oxide varistor (MOV).

The HHB has an input and an output. The HHB is configured to electrically connect a first terminal and a second terminal under normal operating conditions, and to separate the first terminal and the second terminal under fault conditions. In other terms, under normal operating conditions, the input of the HHB is configured to be electrically connected to the first terminal, directly or through one or more additional devices electrically connected in series with the HHB. Likewise, under normal operating conditions, the output of the HHB is configured to be electrically connected to the second terminal, directly or through one or more additional devices electrically connected in series with the HHB. Thus, under normal operating conditions, an electrical current flows between the first terminal and the second terminal through the HHB. Under fault conditions, the input of the HHB is configured to be separated from the output of the HHB, such that an electrical current flow between the first terminal and the second terminal is hindered.

Fault conditions occur when a disturbance occurs that may propagate from the first terminal to the second terminal, or vice versa.

Under normal operating conditions, an electrical current flows between the first terminal and the second terminal through the HHB. In these conditions, the mechanical switch portion is in a conducting state. Further, in these conditions, the solid-state portion may be in a non-conducting state or in a conducting state associated with a higher impedance compared to a branch in which the mechanical switch portion is provided, so that at least a main portion of the current is conducted via the closed mechanical switch portion. Under normal operating conditions, the HHB is said to be closed.

Under fault conditions, the mechanical switch portion opens, thus transitioning into a non-conducting state to interrupt current flow. Meanwhile, the solid-state portion is adjusted into a conducting state if not already in a conducting state. Optionally, a time period thereafter, the solid-state portion may be adjusted to a non-conducting state. When at least the mechanical open, the HHB is in a state where it separates a first terminal and a second terminal. Depending on whether solid-state portion is in a conducting state or a non-conducting state, the HBB may at least limit or optionally interrupt current flow. In the context of the application, separating refers to the HBB being in a state where current flow between a first terminal and a second terminal is at least limited or optionally interrupted.

A converter is a device or assembly of devices configured to transform electrical power from one form to another form. A converter is said to operate in a rectifier mode when it transforms AC power into DC power. Thus, a converter in a rectifier mode absorbs electrical power from the AC side and it generates electrical power at the DC side. A converter is said to operate in an inverter mode when it transforms DC power into AC power. Thus, a converter in an inverter mode absorbs electrical power from the DC side and it generates electrical power at the AC side.

Tripping herein refers to an event of discontinuing an operation of the converter by blocking said converter and open an AC breaker. Tripping is triggered by excessive charging of the converter above a trip level, which trip level depends on converter design. Tripping may occur, for example, as a protection measure so as to prevent damage to the converter or to any of the other devices to which the converter is normally configured to be electrically connected.

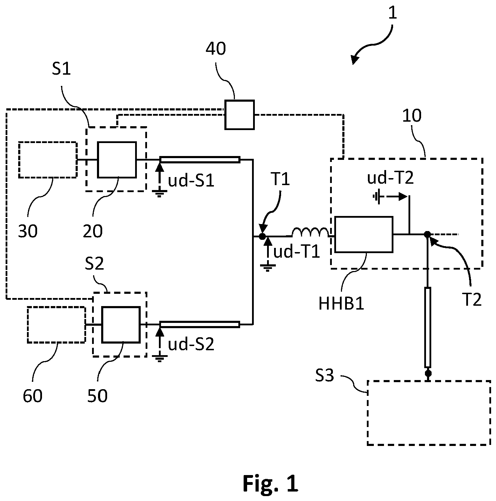

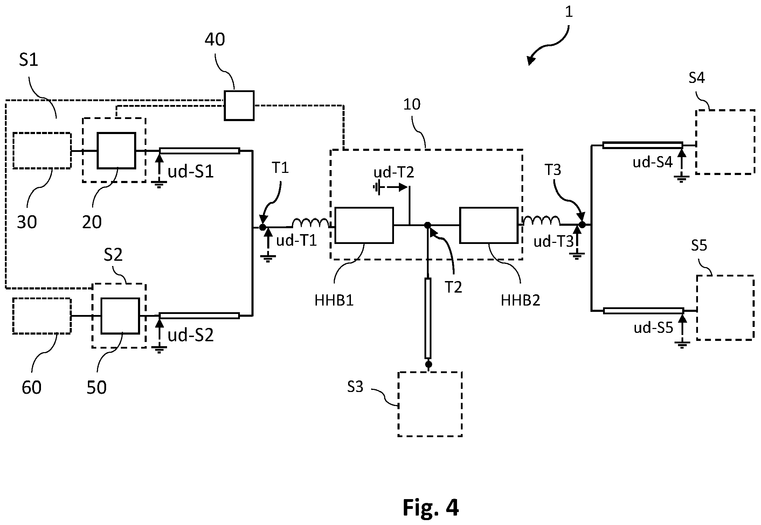

Fig. 1 illustrates a multi-terminal (MT) high voltage direct current (HVDC) system 1, hereinafter simply referred to as MTDC 1. The MTDC 1 is an electrical power transmission network that utilizes direct current (DC) cables for transmitting electrical power across multiple points. Fig. 4 illustrates an embodiment of the MTDC 1 similar to that in Fig. 1.

In the following, the MTDC 1 in Fig. 1 will be described. The MTDC 1 is exemplified to comprise a first portion, a first terminal T1, a DC switch station 10, a second terminal T2 and a second portion.

The first portion of the MTDC1 comprises a first converter station S1 and a second converter station S2. The first converter station S1 comprises a first converter 20. The first converter is connected to a first alternating current (AC) system 30. The second converter station S2 comprises a second converter 50. The second converter 50 is connected to a second alternating current (AC).

The DC switch station 10 comprises a first DC circuit breaker. In the embodiment in Fig. 1, the first DC circuit breaker is a hybrid HVDC circuit breaker HHB1, hereinafter simply referred to as HHB1. However, the first DC circuit breaker may alternatively be another type of DC circuit breaker. The HHB1 is configured to be adjustable between a closed state (HHB1 is closed) in which it electrically connects the first terminal T1 and the second terminal T2 and an open state (HHB1 is open) in which it separates the first terminal T1 and the second terminal T2.

The first portion of the MTDC1 further comprises a first DC cable and a second DC cable. The first converter station S1 is electrically connected to the terminal T1 via the first DC cable. The second converter station S2 is electrically connected to the terminal T1 via the second DC cable.

The second portion of the MTDC1 comprises a third converter station S3 and a third DC cable. The third converter station S3 is electrically connected to the second terminal T2 through the third DC cable. The third converter station S3 may comprise a third converter configured to operate, under normal operating conditions, in the inverter mode.

The MTDC 1 may controllable by means of a control unit 40. The control unit 40 is configured to control the first converter station S1, the second converter station S2 and the DC switch station 10. The MTDC 1 may comprise said control unit 40.

The HHB1 is configured to separate and to electrically connect the first portion of the MTDC1 and the second portion of the MTDC1. When a disturbance of an operation of the MTDC1, such as an overcurrent or a short circuit, occurs that may propagate from the first portion of the MTDC1 to the second portion of the MTDC1, or vice versa, the HHB1 opens, i.e. it separates the first portion of the MTDC1 from the second portion of the MTDC1. The separation aims to counteract a propagation of the disturbance from the first portion to the second portion, or vice versa.

The first converter station S1 has an AC side and a DC side. The DC side of the first converter station S1 is connected to, or provided by, a DC side of the first converter 20. The AC side of the first converter station S1 is connected to, or provided by, an AC side of the first converter 20. The AC side of the first converter station S1 is connected to said first AC system 30. Likewise, the second converter station S2 has an AC side and a DC side. The AC side of the second converter station S2 is connected to, or provided by, an AC side of the second converter 50. The AC side of the second converter station S2 may be connected to said second AC system 60. The DC side of the second converter station S2 is connected to, or provided by, a DC side of the second converter 50. The MTDC 1 further comprises a common zero-voltage reference point. A first DC side voltage, hereinafter referred to as ud-S1, is defined between the DC side of the first converter station S1 and the common zero-voltage reference point of the MTDC1. A first DC current, hereinafter referred to as DC current Id, is defined flowing through the first DC cable at the DC side of the first converter 20. A second DC side voltage, hereinafter referred to as ud-S2, is defined between the DC side of the second converter station S2 and the common zero-voltage reference point of the MTDC1. A second DC current, hereinafter referred to as DC current Id-S2, is defined flowing through the second DC cable at the DC side of the second converter 50. A third voltage, hereinafter referred to as ud-T1, is defined between the first terminal T1 and the common zero-voltage reference point of the MTDC1. A fourth voltage, hereinafter referred to as ud-T2, is defined between the second terminal T2 and the common zero-voltage reference point of the MTDC1.

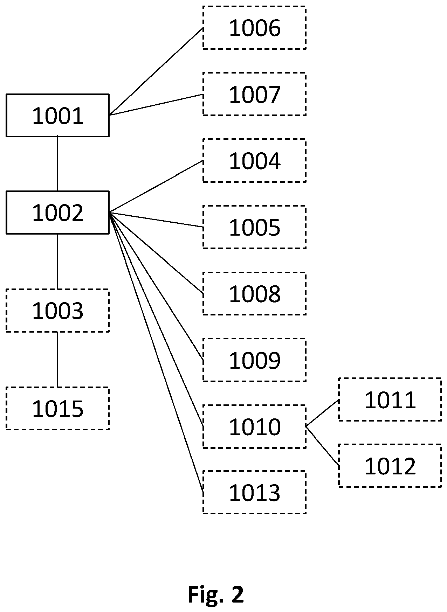

According to a first aspect of the present invention, a method is provided of controlling a converter of a multi-terminal HVDC system when said converter is being separated from a part of said multi-terminal HVDC system due to an operation of a DC circuit breaker. The operation of the DC circuit breaker is carried out in response to a disturbance of an operation of the multi-terminal HVDC. As shown in Fig. 2, the method comprises a step 1001 and a step 1002. In the step 1001, a signal is provided. The signal is indicative of a DC current, between a DC side of said converter and the DC circuit breaker, changing direction so that the DC current flows towards said DC side of said converter. In the step 1002, if a condition to be further described below is fulfilled, a DC side voltage of said converter is increased by a DC side delta voltage depending on said signal. The above mentioned condition is that said converter is operating in a rectifier mode before said disturbance and operating to regulate a frequency and a voltage of a connected AC system. Said DC side delta voltage is based on a value FIXED_DC_OFS independent of the DC current and/or a regulated value REG_DC_OFS dependent on the DC current.

In the following, the method is further described with reference to the first converter 20. Specifically, it is assumed that, under normal operating conditions, the first converter 20 operates in a rectifier mode and that, under fault conditions, the first converter 20 cannot be switched to an inverter mode. For instance, the first converter 20 cannot be switched, under fault conditions, from a rectifier mode to an inverter mode when the first AC system 30 is offshore, e.g. the first AC system 30 comprises an offshore wind farm feeding energy to the first converter 20. The first converter 20 operates to regulate a frequency and a voltage of the AC system 30.

It is implicitly understood that the method may be equivalently described, mutatis mutandis, with reference to the second converter 50 by assuming that, under normal operating conditions, both the first converter 20 and the second converter 50 operate in a respective rectifier mode, and that the second converter 50 cannot be switched to an inverter mode under fault conditions.

Under normal operating conditions, the first converter 20 operates in a rectifier mode. Under normal operating conditions, ud-T1 is smaller than ud-S1. As a result, the DC current Id flows out of the converter 20 into the first DC cable towards the first terminal T1.

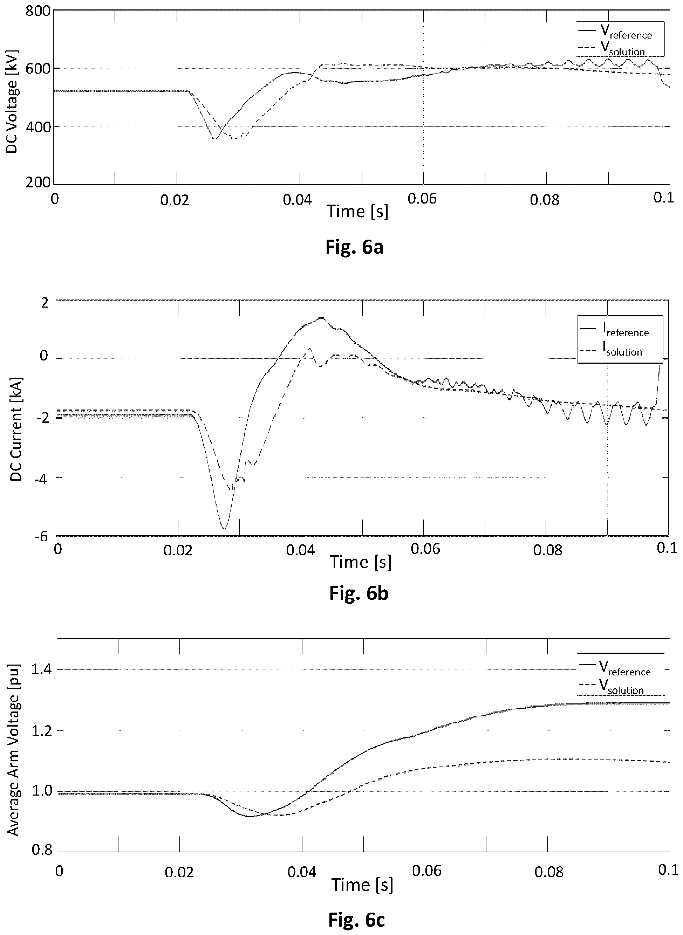

Fig. 6a illustrates, in solid line, ud-S1 (on the y-axis) versus time (on the x-axis) when the method according to the first aspect of the present invention is not executed. Likewise, Fig. 6b illustrates, in solid line, the DC current Id (on the y-axis) versus time (on the x-axis) when the method according to the first aspect of the present invention is not executed. In Fig. 6a and Fig. 6b, the normal operating conditions correspond to a first time window during which ud-S1 and the DC current Id are constant with time, i.e. the time window, between 0 s and a first time instant before 0.03 s, during which ud-S1 and Id are constant with time. By convention, the DC current Id is assumed to be positive when flowing into the first converter 20. Therefore, under normal operating conditions, the DC current Id is negative (cf. Fig. 6b, solid line).

Under fault conditions, the opening of the HHB1 alters the circuit topology of the MTDC 1, and a current temporarily flows through the energy dissipation portion of the HHB1. As a result, ud-S1 and ud-T1 start varying as compared to the their respective value under normal operating conditions.

Specifically, there exists a second time instant window during which ud-T1 becomes larger than ud-S1. As a result, there exists a third time instant (between 0.02 a and 0.03 s in Fig. 6b) at which the DC current Id starts varying by assuming increasingly less negative values. The third time instant may be equal to the second time instant, or larger than the second time instant. Eventually, the DC current Id becomes positive at a fourth time instant (between 0.03 s and 0.04 s in Fig. 6b). The fourth time instant is larger than the third time instant. The DC current Id is positive during a second time window between the fourth time instant and a fifth time instant (between 0.05 s and 0.06 s in Fig. 6b). When the DC current Id is positive, it means that the DC current Id has reversed its flow direction as compared to the normal operating conditions, i.e. the DC current Id flows through the first DC cable into the first converter 20 during the second time window. In other terms, the DC current Id has transiently reversed its normal direction of flow. After the fifth time instant, the DC current becomes negative again and it remains so.

Fig. 6c illustrates, in solid line, an average arm voltage (on the y-axis) versus time (on the x-axis) when the method according to the first aspect of the present invention is not executed. The arm voltage is the sum of the cell voltage within an arm. As is known, a converter may be designed to provide three phases. Each phase may be associated with a first arm, i.e., a positive arm and second arm, i.e., a negative arm.

As a result of this transient reversal, the first converter 20 starts absorbing electrical power from the DC side. At the same time, the first converter 20 continues to absorb electrical power from the AC side, which was already doing under normal operating conditions. Therefore, the first converter 20 may accumulate excessive charging and eventually get tripped unless a countermeasure is taken. If the first converter 20 were switched to an inverter mode, tripping of the first converter 20 could be avoided. However, as mentioned above, it is herein assumed that the first converter 20 cannot be switched to an inverter mode.

On the contrary, tripping of the second converter 50 may be avoided by switching, under fault conditions, the second converter 50 to an inverter mode. For instance, the second converter 50 can be switched, under fault conditions, from a rectifier mode to an inverter mode when the second AC system 60 is onshore, e.g. the second AC system 60 comprises an onshore AC power grid feeding energy to the second converter 50.

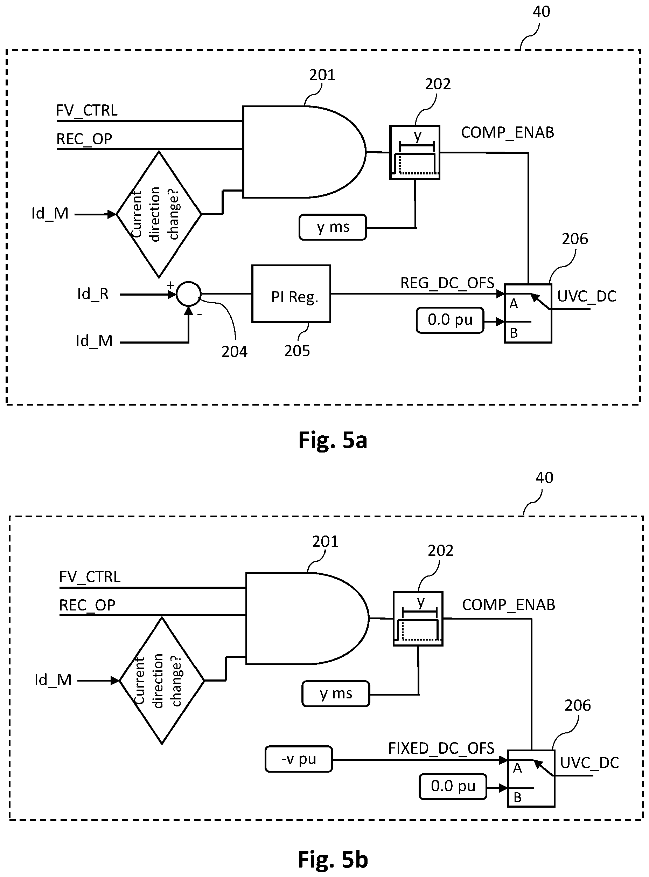

In the following, the step 1001 and step 1002 shown in Fig. 2 will be further described. In the step 1001, a signal indicative of the DC current Id changing direction such that the DC current Id flows towards the DC side of the first converter 20. In the step 1002, the DC side voltage ud-S1 is increased by a DC delta voltage, hereinafter referred to as delta voltage uVC-DC, depending on the signal provided at the step 1001. The delta voltage uVC-DC is based on a value FIXED_DC_OFS independent of the DC current Id (cf. FIXED_DC_OFS in Fig. 5b). Alternatively, the delta voltage uVC-DC is based on a regulated value REG_DC_OFS (cf. REG_DC_OFS in Fig. 5a) dependent on the DC current Id. As a result of the method being executed, the transient reversal of the DC current Id is counteracted, as further explained below. As a result of this counteraction, tripping of the first converter 20 is avoided.

Fig. 6a illustrates, in dashed line, ud-S1 (on the y-axis) versus time (on the x-axis) when the method according to the first aspect of the present invention is executed. Fig. 6b illustrates, in dashed line, the DC current Id (on the y-axis) versus time (on the x-axis) when the method according to the first aspect of the present invention is executed. As a result of increasing ud-S1 according to the step 1002, the transient reversal of the DC current Id is counteracted.

It is seen from Fig. 6b that the DC current Id is disturbed from a pre-disturbance level. When the method according to the first aspect of the present invention is executed (cf. dashed line in Fig. 6b), the DC current Id stably approaches said pre-disturbance level after having been disturbed. Compared to the case wherein the method is not executed, the DC current ID does not return to the pre-disturbance in a stable manner as indicated with period of oscillations between 0.06 s and 0.1 s (cf. solid line in Fig. 6b). Further, when executing said method, the DC current is damped such that the portion of time during which the DC current Id is positive is reduced (cf. Fig. 6b, dashed line) as compared to the case (cf. Fig. 6b, solid line) when the method according to the first aspect of the present invention is not executed. Thus, in view of the above, the risk of tripping of the first converter 20 is reduced, preferably avoided.

Fig. 6c illustrates, in dashed line, the average arm voltage (on the y-axis) versus time (on the x-axis) when the method according to the first aspect of the present invention is executed.

The delta voltage uVC-DC may be reduced to zero a certain time delay after the DC current Id has changed back to the direction it has under normal operating conditions. In such a case, the adjustment of ud-S1 by the delta voltage uVC-DC is a transient adjustment, i.e. it is only temporary.

It is implicitly understood that the method may be equivalently described, mutatis mutandis, with reference to the second converter 50. In such a case, the DC side voltage is ud-S2 and the DC current is Id-S2. As a result of the method being executed, the transient reversal of the DC current Id-S2 is counteracted. As a result of this counteraction, tripping of the second converter 50 is avoided.

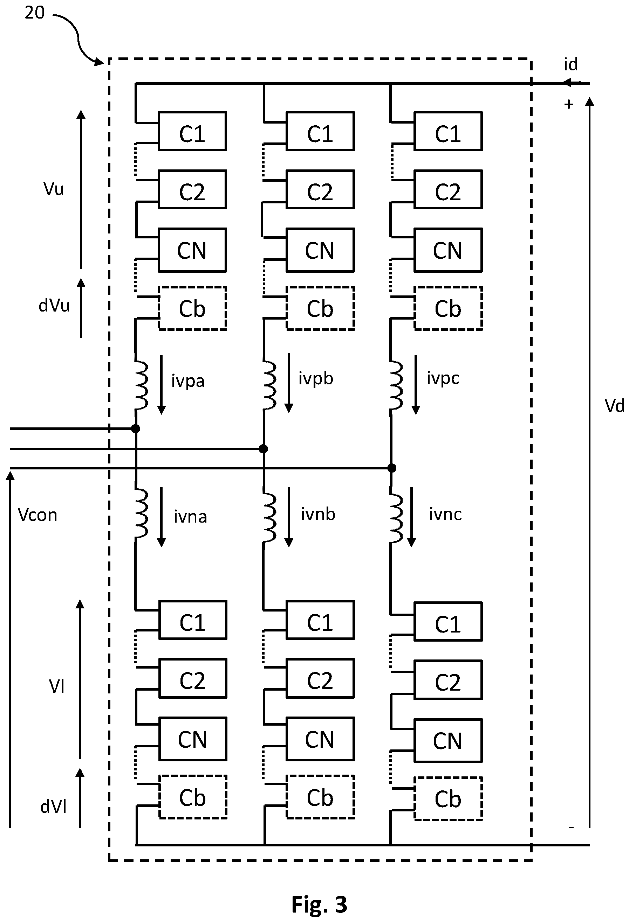

In the following, the method will be described in more detail for the case when the first converter 20 is a modular multilevel converter, hereinafter referred to as MMC. Fig. 3 illustrates an MMC. The MMC comprises three phase legs electrically connected in parallel between a positive DC busbar and a negative DC busbar. The positive DC busbar is at a positive potential as compared to the common zero-voltage reference potential of the MTDC 1. The negative DC busbar is at a negative potential as compared to the common zero-voltage reference potential of the MTDC 1. A DC voltage Vd is defined between the positive DC busbar and the negative DC busbar. A DC current flows through the positive DC bar. This DC current is the DC current Id mentioned above with reference to the first converter 20 in Fig. 1. Thus, in the presence of a transient current reversal of the DC current ID, the DC current Id flows towards the MMC, as shown in Fig. 3, during the second time window.

Each phase leg comprises a positive arm, a negative arm and an AC terminal An AC voltage Vcon is defined between the AC terminal and the common zero-voltage reference potential of the MTDC 1. The AC voltage Vcon of a phase leg is phase-shifted as compared to the AC voltage Vcon of another phase leg. In other terms, the AC voltage Vcon of each phase leg has a respective phase. In the followings, the positive arm, the negative arm and the AC terminal of a first phase leg (i.e. the leftmost phase leg in Fig. 3) will be further described, but similar considerations apply, mutatis mutandis, to any of the other phase legs.

The positive arm and the negative arm are electrically connected at the AC terminal. The positive arm connects the positive DC busbar with the AC terminal. The negative arm connects the negative DC bar with the AC terminal. The positive arm comprises a first plurality Np of converter cells C1, C2, CN, Cb electrically connected in series. The negative arm comprises a second plurality Nn of converter cells C1, C2, CN, Cb electrically connected in series. A voltage Vu is defined over the first plurality Np of converter cells. A voltage Vl is defined over the second plurality Nn of converter cells. The positive arm has a current Ivpa flowing through the positive arm towards the AC terminal. The negative arm has a current Ivna flowing through the negative arm out of the Ac terminal. In the MMC in Fig. 3, the first plurality Np is the same as the second plurality Nn. However, the first plurality Np may alternatively be different from the second plurality Nn.

A converter cell comprises an energy storage element, such as a capacitor, and a switching circuit, such as a half-bridge or a full-bridge switching circuit. Each converter cell is configured to be in either a bypass state or a voltage insert mode. In the bypass state, a converter cell in a positive arm does not contribute to the voltage Vu. The bypass state is typically achieved by the current Ivpa passes through the switching circuit without altering the voltage Vu. In the voltage insert mode, a converter cell in the positive arm contributes to the voltage Vu by a cell voltage dVu. The voltage insert mode is typically achieved by bypassing the switching circuit, such that the current Ivpa passes through the energy storage element. Similar considerations apply to a converter cell in a negative arm.

An arm, i.e. a positive arm or a negative arm, has an insertion index. The insertion index indicates the fraction of the total number of converter cells of the arm which are in the voltage insert mode. Thus, the insertion index ranges from 0 to 1. When the insertion index is zero, all cells of the arm are in the bypass mode. When the insertion index is one, all cells of the arm are in the voltage insert mode. The insertion index is dynamically adjustable, thus being a function of time. WO 2011026927A1 illustrates a method and an apparatus for calculating the insertion indices of a modular multilevel converter.

As illustrated in Fig. 2, the method according to the first aspect of the present invention may further comprise the step 1003 of modifying the insertion index of the positive arm and the insertion index of the negative arm of at least a first phase leg so that the delta voltage uVC-DC is equally shared by said positive arm and by said negative arm without substantially affecting the AC voltage Vcon of said first phase leg. In other terms, the delta voltage uVC-DC is distributed over said positive arm and over said negative arm to modify the insertion index of said positive arm and the insertion index of said negative arm in such a way that the sumVu+Vl, of the voltage Vu and the voltage Vl is changed, whereas the difference, Vl-Vu, is unchanged. As a result, the AC voltage Vcon of said first phase leg is unaffected

This is particularly useful when the MMC operates, under normal operating conditions, in a rectifier mode and it cannot be switched, under fault conditions, to an inverter mode. As mentioned above, it is herein assumed that, under normal operating conditions, the first converter 20 (cf. Fig. 1) operates in a rectifier mode and that, under fault conditions, the first converter 20 cannot be switched to an inverter mode. This means that, when the first converter 20 is the MMC in Fig. 3, the AC voltage Vcon of said first phase leg cannot substantially change. For instance, the first converter 20 cannot be switched, under fault conditions, from a rectifier mode to an inverter mode when the first AC system 30 (cf. Fig. 1) is offshore, e.g. the first AC system 30 comprises an offshore wind farm feeding energy to the first converter 20.

Specifically, the sum Vu+Vl is changed such that ud-S1 is increased by the delta voltage uVC-DC. As a result, the transient reversal of the DC current Id is counteracted.

In the following, it will be briefly illustrated, with reference to the first phase leg (i.e. the leftmost phase leg in Fig. 3), the reason why the AC voltage Vcon is substantially unaffected when changing the sum Vu+Vl while keeping the difference Vl-Vu substantially unchanged. However, similar considerations apply, mutatis mutandis, to any of the other phase legs.

WO 2011026927A1 illustrates an equivalent circuit of a phase leg of an MMC (cf. Fig. 2 in WO 2011026927A1). From the equivalent circuit, the following equations (cf. Eq.(A8) in WO 2011026927A1) are derived for the first phase leg:

$$\frac{Vd}{2} = \frac{Vl + Vu}{2} + RI_c + + L\frac{dI_c}{dt} \quad (Eq. 1a)$$

$$Vcon = \frac{Vl - Vu}{2} - \frac{R}{2}I_s - \frac{L}{2}\frac{dI_s}{dt} \quad (Eq. 1b)$$

Here, R and L are, respectively, a resistance and an inductance of the first phase leg. A circulating current $I_c$ is defined by

$$I_c = \frac{Ivpa + Ivna}{2} \quad (Eq. 2)$$

An AC current $I_s$ is defined by Kirchhoff's current law at the AC terminal:

$$I_s = Ivpa - Ivna \quad (Eq. 3)$$

Eq. 1a shows that a change in the sum Vl+Vu results in a change of the DC voltage Vd, with no impact on the AC voltage Vcon. Furthermore, Eq. 1b shows the AC voltage Vcon is substantially unchanged if the difference Vl-Vu is substantially unchanged, because the impact of the AC current $I_s$ is negligible as compared to the impact of the difference Vl-Vu. Thus, as mentioned above, the transient reversal of the DC current Id is counteracted without substantially affecting the AC voltage Vcon.

As shown in Fig. 2, the step 1002 may comprise the step 1004 and the step 1005. In such a case, it is assumed that the first converter 20 is an MMC, such as the MMC in Fig. 3. In the step 1002, ud-S1 is increased by the delta voltage uVC-DC depending on the signal, provided at step 1001, indicative of the transient reversal of the DC current Id. In the step 1004, the number of converter cells being in the voltage insert mode in the positive arm is selected in dependence of the insertion index of said positive arm. In the step 1005, the number of converter cells being in the voltage insert mode in the negative arm is selected in dependence of the insertion index of said negative arm.

As shown in Fig. 2, the step 1001 may comprise the step 1006 and the step 1007. In such a case, the first converter 20 may be an MMC, such as the MMC in Fig. 3. In the step 1006, a present value Id-M of the DC current Id is measured. The present value Id-M is a value of the DC current at the present time instant. The present value Id-M is the amplitude, i.e. the intensity, of the DC current Id at the present time instant. The present value Id-M is positive when the DC current Id is flowing into the first converter 20. The present value Id-M is negative when the DC current Id is flowing out of the first converter 20. In the step 1007, the signal according to step 1001 is provided if the present value Id-M exceeds a threshold value. In Fig. 2, the threshold value is zero.

Thus, the step 1002 of increasing ud-S1 by the delta voltage uVC-DC depending on the signal provided at the step 1007, occurs reactively to the transient reversal of the DC current Id. In other terms, if the transient reversal is detected at the step 1006, then action according to the step 1002 is taken to counteract the transient reversal.

Alternatively, the threshold value may be smaller than zero. In such a case, the step 1002 of increasing ud-S1 by the delta voltage uVC-DC depending on the signal provided at the step 1007, occurs proactively to the transient reversal of the DC current Id. In other terms, if the present value Id-M measured at the step 1006 exceeds the threshold value, it means that a risk of transient reversal of the DC current Id does exist, but the DC current Id has not reversed yet its direction of flow. Nonetheless, action according to step 1002 is taken to counteract the transient reversal of the DC current Id.

As shown in Fig. 2, the step 1002 may further comprise the step 1008. In such a case, the first converter 20 may be an MMC, such as the MMC in Fig. 3. In the step 1008, the delta voltage uVC-DC is determined to be a fixed value FIXED_DC_OFS independent of the DC current Id, i.e. a value FIXED_DC_OFS constant with time and independent of the DC current Id. Alternatively, the delta voltage uVC-DC is determined to be a value FIXED_DC_OFS independent of the DC current Id. In such a case, the value FIXED_DC_OFS may vary with time according to a function of time independent of the DC current Id.

As shown in Fig. 2, the step 1002 may further comprise, in alternative to step 1008, the step 1009 and the step 1010. In the step 1009, a present value Id-M of the DC current Id at a present time instant is measured. In the step 1010, the delta voltage uVC-DC is determined to be a value REG_DC_OFS dependent on both the present value Id-M measured at the step 1009 and a reference amplitude Id-R of the DC current Id. The reference amplitude Id-R is an intensity taken as a reference for the intensity of DC current Id. The reference amplitude Id-R may be negative, positive or equal to zero.

As shown in Fig. 2, the step 1010 may further comprise the step 1011 and the step 1012. In the step 1011, an error signal is computed based on a difference between the amplitude Id-M measured at the step 1009 and on the reference amplitude Id-R. In the step 1012, the value REG_DC_OFS is determined to be a value based on a proportional component of the error signal and on an integral component of the error signal.

As shown in Fig. 2, the step 1002 may further comprise the step 1013. In the step 1013, the delta voltage uVC-DC is adjusted so that a difference, between the DC side voltage ud-S1 and a voltage at the DC circuit breaker, is reduced. This difference may be substantially equal to zero. Said voltage at the DC circuit breaker may be ud-T1.

The signal provided at the step 1001, indicative of the DC current Id changing direction, may be a first signal. The method may further comprise a step 1014. In the step 1014, at least a second signal is received.

Furthermore, in the step 1014 a control signal COMP_ENAB is provided based on said first signal and on said at least a second signal. When the method comprises the step 1014, the step 1002 of increasing the DC side voltage ud-S1 is performed in response to said control signal COMP_ENAB. At least one of said first signal and said at least one second signal is one of a first input signal FV_CTRL, and a second input signal REC_OP. The first input signal FV_CTRL is indicative of frequency control mode and voltage control mode. The second input signal REC_OP is indicative of whether the first converter 20 operates in a rectifier mode. As exemplified in Figs. 5a, 5b, the first input signal FV_CTRL, and the second input signal REC_OP should be fulfilled, in addition to a current change direction condition being fulfilled, in order for the output signal COMP_ENAB to be enabled.

As shown in Fig. 2, the method may further comprise a step 1015. In the step 1015, the duration for performing the step 1002 is increased. To fulfil all four conditions, the chance or duration is very short, but the increase voltage should not be immediately reduced to zero, therefore, the duration is increased by an increased pulse width of y ms.

According to a second aspect of the present invention, the control unit 40 is provided for controlling at least one converter of the MTDC 1. The control unit 40 is configured to perform the method according to the first aspect of the present invention.

Fig. 5a and Fig. 5b illustrate a first embodiment and a second embodiment, respectively, of a logic schematic for the control unit 40 according to the second aspect of the present invention.

As shown in Fig. 5a, the logic schematic for said control unit 40 comprises an AND logic gate 201, a time extension operator 202 and a switch operator 206. The AND logic gate 201 receives said first input signal, said second input signal and a third input signal. The third input signal of the AND logic gate 201 is a signal indicating said current change condition being fulfilled. As a non-limiting example, an current change operator 203 may be used to provide said signal indicating said current change condition being fulfilled. As a non-limiting example, the current change operator 203 may be a sign operator (i.e., checks a change in sign om the current Id_M).

The time extension operator 202 receives an input signal and produces an output signal. The output signal is the control signal COMP_ENAB mentioned above with reference to the step 1014 (cf. Fig. 2). So as to prevent the increase in voltage should to not be immediately reduced to zero, the time extension operator 202 may extend a time duration by a pulse width of y ms.

The switch operator 206 receives control signal COMP_ENAB and if at a high level, the switch operator provides the regulated value REG_DC_OFS mentioned above with reference to the step 1002 (cf. Fig. 2), and if at a low level, the switch operator 206 provides 0.0 pu.

As shown in Fig. 5a, the logic schematic may include an addition/subtraction operator 204 and a proportional integral (PI) regulation operator 205.

The addition/subtraction operator 204 receive a first input signal and a second input signal and produces an output signal. The first input signal of the addition/subtraction operator 204 is the present value Id-M of the DC current Id. The second input signal of the addition/subtraction operator 204 is the reference amplitude Id-R mentioned above with reference to the step 1010 (cf. Fig. 2). The reference amplitude Id-R may be the DC current pre-disturbance. Whether the addition/subtraction operator 204 is an addition operator or a subtraction operator depends on signs of the first input signal and the input signal. It should be understood that either may be applied if the input signals are provided with the appropriate signs. In the following, the addition/subtraction operator 204 is exemplified as an addition operator.

The output signal of the addition operator 204 is the error signal mentioned above with reference to the step 1011 (cf. Fig. 2), i.e. a signal based on the difference between the first input signal of the addition operator 204 and the second input signal of the addition operator 204. As further illustrated below, the logic schematics for the control unit 40 in Fig. 5a is regulates the delta voltage uVC-DC such that the present value Id-M of the DC current Id is driven back towards the reference amplitude Id-R when the present value Id-M starts deviating from the reference amplitude Id-R, i.e. when the error signal mentioned above with reference to the step 1011 (cf. Fig. 2) starts increasing in absolute value.

The output signal of the PI Reg operator 205 is based on a proportional component of the input signal of the PI Reg operator 205 and an integral component of the input signal of the PI Reg operator 205. The proportional component is equal to the input signal of the PI controller 205 multiplied by a proportional gain. The integral component is equal to a time integral of the input signal of the PI controller 205 multiplied by an integral gain. In other terms, the integral component is a cumulative error. The output signal of the PI controller 205 is equal to the sum of the proportional component and the integral component.

Thus, the regulated value REG_DC_OFS mentioned above with reference to the step 1002 (cf. Fig. 2) depends on the present value Id-M of the DC current Id. Specifically, the regulated value REG_DC_OFS depends both on the present value Id-M and the reference amplitude Id-R.

The second embodiment of the logic schematics for the control unit 40 shown in Fig. 5b is similar to the first embodiment of the logic schematics for the control unit 40 shown in Fig. 5a. The only differences are the following ones. The addition/subtraction operator 204 and the PI Reg operator 205 (cf. Fig. 5a) are absent from the embodiment in Fig. 5b. Moreover, the switch operator 206 may provide a fixed value FIXED_DC_OFS mentioned above with reference to the step 1002 and to the step 1008 (cf. Fig. 2). The value FIXED_DC_OFS is determined such that, if input signal COMP_ENAB of the switch operator 206 is high, the delta voltage uVC-DC, being equal to the value FIXED_DC_OFS, adjusts ud-S1 in a way that ud-S1 is increased as compared to the value of ud-S1 under normal operating conditions.

In any of the embodiments of the control unit 40 herein provided, the delta voltage uVC-DC may be directly supplied to the first converter 20 so that ud-S1 is adjusted in real time. In such a case, after the value of the delta voltage uVC-DC has been updated by the switch 206, the delta voltage uVC-DC is immediately supplied to the first converter 20 in order to increase ud-S1.

According to a third aspect of the present invention, the MTDC 1 is provided. The MTDC 1 may comprise at least a second DC circuit breaker in addition to the HHB1. The HHB1 is configured to separate the first converter 20 from a part of the MTDC 1 in response to a disturbance of an operation of the MTDC 1. The control unit 40 comprised by the MTDC 1 may be configured according to the second aspect of the present invention. The MTDC 1 may be the MTDC 1 illustrated in Fig. 1 and described above in connection with the first aspect of the present invention. Alternatively, the MTDC 1 may be the MTDC 1 illustrated in Fig. 4.

In the following, the MTDC 1 illustrated in Fig. 4 will be further described. As already mentioned, the MTDC 1 in Fig. 4 is similar to the MTDC 1 in Fig. 1. The only differences are the following ones. The MTDC 1 in Fig. 4 further comprises a third terminal T3 and a third portion.

In the MTDC 1 in Fig. 4, the switch station 10 further comprises a second DC circuit breaker HHB2. The second DC circuit breaker HHB2 is an hybrid HVDC circuit breaker, hereinafter simply referred to as HHB2. However, the second DC circuit breaker may alternatively be another type of DC circuit breaker, such as a vacuum DC circuit breaker. The HHB2 has an input and an output. The input of the HHB2 is electrically connected to the second terminal T2. The output of the HHB2 is electrically connected to the third terminal T3. In the MTDC 1 in Fig. 4, the DC switch station 10 further comprises an output, which coincides with the output of the HHB2. The HHB2 is configured to separate and to electrically connect the second terminal T2 and the third terminal T3.

The third portion of the MTDC1 in Fig. 4 comprises a fourth converter station S4, a fourth DC cable, a fifth converter station S5 and a fifth DC cable. The fourth converter station S4 has an input that is electrically connected to the third terminal T3 through the fourth DC cable. The fifth converter station S5 has an input that is electrically connected to the third terminal T3 through the fifth DC cable.

A fifth voltage, hereinafter referred to as ud-S4, is defined between the input of the fourth converter station S4 and the common zero-voltage reference point of the MTDC1. A sixth voltage, hereinafter referred to as ud-S5, is defined between the input of the fifth converter station S5 and the common zero-voltage reference point of the MTDC1.

The fourth converter station S4 may comprise a fourth converter configured to operate, under normal operating conditions, as a STACOM, i.e. as a static synchronous compensator. The fifth converter station S5 may comprise a fifth converter configured to operate, under normal operating conditions, in the inverter mode.

## Claims

1. Method (1000) of controlling a converter (20, 50) of a multi-terminal, MT-, HVDC system (1) when said converter (20, 50) is being separated from a part of said MT-HVDC system (1) due to an operation of a DC circuit breaker (HHB1), said operation of said DC circuit breaker (HHB1) being carried out in response to a disturbance of an operation of the MT-HVDC system (1), the method comprising:

   - providing (1001) a signal indicative of a DC current (id) between a DC side of said converter (20, and the DC circuit breaker (HHB1) changing direction so that the DC current (id) flows towards said DC side of said converter (20);
   - if said converter (20) is operating in rectifier mode before said disturbance and operating to regulate a frequency and a voltage of a connected AC system (30), increasing (1002) a DC side voltage (ud-S1, ud-S2) of said converter (20, 50) by a DC side delta voltage depending on said signal,

   wherein said DC side delta voltage is based on a prefixed value (FIXED_DC_OFS) and/or a regulated value dependent on the DC current (REG_DC_OFS).

2. The method according to claim 1, wherein the DC side delta voltage is reduced to zero a certain time delay after the DC current direction is changed back to a direction from said DC side of said converter (20, 50) to said DC circuit breaker (HHB1).

3. The method according to any of claims 1-2, wherein the converter (20) is a modular multilevel converter (20) comprising a plurality of cells (C1, C2, CN, Cb) which are divided at least in a positive arm of a first phase of said converter (20) and a negative arm of said first phase of said converter, each cell configured to be in either a bypass state or a voltage insert mode, wherein cells in voltage insert mode for a particular arm during normal operations is specified by an insertion index comprising data representing the portion of available cells that should be in said voltage insert mode for a particular arm, the method comprising:

   - modifying (1003) the insertion index of said positive arm and said negative arm of at least a first phase so that the DC side delta voltage is shared by said positive arm and said negative arm without affecting an AC side voltage of said converter.

4. The method according to claim 3, wherein said step of increasing a DC side voltage of said converter by a DC side delta voltage includes:

   - selecting (1004) the number of cells inserted in said voltage insert mode in dependence of the insertion index for said positive arm;
- selecting (1005) the number of cells inserted in said voltage insert mode in dependence of the insertion index for said negative arm.

5. The method according to any of the preceding claims, wherein said step of providing said signal includes:

    - measuring (1006) a present value (id_M) of the DC current (id);
    - providing (1007) said signal if the measured amplitude (id_M) of the DC current (id) exceeds a threshold value, wherein said threshold value is zero.

6. The method according to any preceding claims in combination with claim 5, wherein the step of increasing a DC side voltage of said converter by a DC side delta voltage depending on said signal includes:

    - determining (1008) a fixed value and/or independent value (FIXED_DC_OFS) of the DC current (id) as said DC delta voltage (UVC_DC).

7. The method according to any preceding claims in combination with claim 6, wherein said step of increasing said DC side voltage of said converter by a DC side delta voltage depending on said signal includes:

    - measuring (1009) a current value (id_M) of the DC current (id);
    - determining (1010) said DC delta voltage (UVC_DC) as a value (REG_DC_OFS) dependent on both the measured value (id_M) of the DC current (id) and a reference amplitude (id_R) of the DC current (id).

8. The method according to claim 7, wherein said step (1010) of determining said DC delta voltage (UVC_DC) as a value (REG_DC_OFS) dependent on both the measured value (id_M) of the DC current (id) and a reference amplitude (id_R) of the DC current (id) includes:

    - computing (1011) an error signal based on a difference between the measured amplitude (id_M) of the DC current (id) and the reference amplitude (id_R) of the DC current (id);
    - determining (1012) said value (REG_DC_OFS) based on a proportional component of the error signal and an integral component of the error signal.

9. The method according to any of the preceding claims, wherein said step (1002) of increasing the DC side voltage of said converter by a DC side delta voltage depending on said signal includes:

    - adjusting (1013) said DC side delta voltage so that a difference between the DC side voltage and a voltage at the DC circuit breaker is reduced.

10. The method according to claim 9, wherein said step (1013) of adjusting said DC side delta voltage is performed so that a difference between the DC side voltage and a voltage at the DC circuit breaker is substantially zero.

11. The method according to any preceding claims, wherein said signal indicative of a DC current (id) between a DC side of said converter (20, and the DC circuit breaker (HHB1) changing direction is a first signal, the method comprising:

    - receiving (1014) at least a second signal, and providing a control signal (COMP_ENAB) based on said first signal and said at least a second signal,

wherein said step (1002) of increasing a DC side voltage is performed in response to said control signal (COMP_ENAB), wherein at least one of said first signal and said at least a second signal is one of:

    ○ a trigger signal (DISC_OP) indicative of the first DC circuit breaker (HHB1) being triggered;
    ○ a first input signal (FV_CTRL) indicative of converter control mode being in Frequency and voltage control;
    ○ a second input signal (REC_OP) indicative of whether said converter (20) operates in rectifier mode.

12. The method according to any preceding claims, comprising:

    - extending a time duration during which said step of increasing (1002) a DC side voltage (ud-S1, ud-S2) of said converter (20, 50) by a DC side delta voltage depending on said signal is applied.

13. Control unit (40) for controlling at least one converter (20, 50) of a multi-terminal, MT-, HVDC system (1), wherein the control unit (40) is configured to perform the method according to any of claims 1-12.

14. Multi-terminal, MT-, HVDC system (1) comprising:

    - a converter (20) comprising an AC side and a DC side, wherein the converter is configured so that, during normal operation of the MT-HVDC system (1) said converter is configured to operate in rectifier mode and configured to operate to regulate a frequency and/or a voltage of a connected AC system;

- a DC switch station (10) including at least one DC circuit breaker (HHB1, HHB2), wherein a first DC circuit breaker (HHB1) of said at least one DC circuit breaker is configured to separate said converter (20) from a part of said MT- HVDC system in response to a disturbance of an operation of the MT-HVDC system;

- a control unit according to claim 13, optionally, configured to increase the DC side voltage directly by varying insertion and/or bypass number of cells via modifying insertion index or modulation reference voltage.

15. The MT-HVDC system according to claim 14, wherein the converter (20) is a modular multilevel converter comprising a plurality of cells (C1, C2, CN, Cb) which are divided at least in a positive arm of a first phase of said converter (20) and a negative arm of said first phase of said converter, each cell configured to be in either a bypass state or a voltage insert mode, wherein cells in voltage insert mode for a particular arm during normal operations is specified by an insertion index comprising data representing the portion of available cells that should be in said voltage insert mode for a particular arm.

**Fig. 1**

**Fig. 2**

**Fig. 3**

**Fig. 4**

EP 4 687 250 A1

**Fig. 5a**

**Fig. 5b**

**Fig. 6a**

**Fig. 6b**

**Fig. 6c**

<table>
<tr><td>Europäisches Patentamt<br>European Patent Office<br>Office européen des brevets</td><td align="center">**EUROPEAN SEARCH REPORT**</td><td>**Application Number**<br><br>EP 24 19 2530</td></tr>
</table>

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | AMIR KHAN UMER ET AL: "A Novel Model of HVDC Hybrid-Type Superconducting Circuit Breaker and Its Performance Analysis for Limiting and Breaking DC Fault Currents", IEEE TRANSACTIONS ON APPLIED SUPERCONDUCTIVITY, IEEE, USA, vol. 25, no. 6, 1 December 2015 (2015-12-01), pages 1-9, XP011586261, ISSN: 1051-8223, DOI: 10.1109/TASC.2015.2477373 [retrieved on 2015-10-07] | 14,15 | INV.<br>H02J3/36<br>H02J3/00<br>H02M1/32 |
| A | * abstract *<br>* figure 3 *<br>* pages 1,2 * | 1-13 | |
| Y | WICKRAMASINGHE HARITH R ET AL: "Alternate Arm Converters-Based HVDC Model Compatible With the CIGRE B4 DC Grid Test System", IEEE TRANSACTIONS ON POWER DELIVERY, IEEE SERVICE CENTER, NEW YORK, NY, US, vol. 34, no. 1, 1 February 2019 (2019-02-01), pages 149-159, XP011706900, ISSN: 0885-8977, DOI: 10.1109/TPWRD.2018.2850933 [retrieved on 2019-01-22] | 14,15 | **TECHNICAL FIELDS SEARCHED (IPC)**<br><br>H02J<br>H02M |
| A | * figures 1,4,13 *<br>* page 150 - page 151 * | 1-13 | |

The present search report has been drawn up for all claims

| Place of search | Date of completion of the search | Examiner |
|---|---|---|
| Munich | 28 January 2025 | Zettler, Karl-Rudolf |

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011026927 A1